# EUROPEAN PATENT APPLICATION

(11) **EP 4 819 507 A1**
(43) Date of publication of application: **07.10.2026**
(21) Application number: 25168503.8
(22) Date of filing: 04.04.2025
(51) Int. Cl.: H04B 7/185, H04W 36/30, H04W 36/00, H04W 36/14, H04W 36/22, H04W 84/06

(54) **IMPROVED SATELLITE BEAM SWITCHING**

(71) Applicant: ST Engineering iDirect, Inc. dba iDirect, Herndon, VA 20171 (US)
(72) Inventor: NAKHLA, Michel, Herndon, Virginia 20171 (US); ORGREN, Joseph, Herndon, Virginia 20171 (US)
(74) Representative: Patentales BV

(57) **Abstract**

The invention provides, amongst other aspects, a method for automatic selective switching of a terminal from a current SA network to a target SA network in a satellite communication system, the method comprising identifying a need for switching the terminal from the current SA network to another SA network based on predefined switching trigger conditions, identifying at least one candidate target SA network from among a plurality of SA networks comprised in the satellite communication system, determining, for the current SA network and for each respective one of the at least one candidate target SA networks, measurement data indicative of suitability of the candidate target SA network as target SA network, selecting, based on said measurement data, the target SA network from among the current SA network and the one or more candidate target SA networks, wherein the measurement data comprises network status information relating to the star network defined by said SA network, and wherein the network status information comprises at least one of network congestion information indicative of a congestion level of the respective SA networks, physical link conditions of the respective SA networks, and beam footprint of the respective SA networks.

## Description

### Field of the invention

The present invention relates to improved methods and systems for managing and controlling bidirectional communication links through satellites and terminals. Particularly, the invention relates to switching terminals between different SA networks in a satellite communication system.

### Background art

Satellite communication offers advantages such as wide coverage, flexible networking, rapid deployment, and the ability to provide connectivity without geographical restrictions, making it a widely adopted technology. In a satellite communication scenario, due to the rapidly evolving context (e.g., high-speed movement of non-geostationary Earth orbit (NGEO) satellites), a terminal in a connected state must frequently switch between different satellite beams. Also, terminal mobility inherently requires fast and reliable switching. To address these problems, switching may be defined between different SA networks to ensure service continuity.

Prior art solutions primarily address switching based merely on signal degradation and/or according to an inflexible predetermined schema. In a typical prior art set-up, when it is detected that the signal quality in the current SA network has degraded, switching may be performed from the current SA network to the target SA network based merely on signal strength as experienced locally at the terminal.

US11917465B2 discloses a related cell handover method and apparatus. However, US11917465B2 is merely directed at preventing (what is referred to as) "repeated sending of user information", and not to controlling whether (or how or when) switching is to take place between a current SA network and a target SA network.

JP7079360B1 describes a system including a multi-beam satellite communicating with a terminal and a base station, but merely describes switching according to a limited specific "hierarchy" of switching conditions, with congestion measured locally at the terminal always considered first.

The present invention aims at addressing issues, such as the issues mentioned above.

### Summary of the invention

According to a first aspect, the present invention provides a method for automatic selective switching of a terminal from a current SA network to a target SA network in a satellite communication system, the method comprising identifying a need for switching the terminal from the current SA network to another SA network based on predefined switching trigger conditions, identifying at least one candidate target SA network from among a plurality of SA networks comprised in the satellite communication system, determining, for the current SA network and for each respective one of the at least one candidate target SA networks, measurement data indicative of suitability of the candidate target SA network as target SA network, selecting, based on said measurement data, the target SA network from among the current SA network and the one or more candidate target SA networks, wherein the measurement data comprises network status information relating to the star network defined by said SA network.

With such a method, the invention may advantageously provide improved switching. In contrast with prior art methods, the present invention provides switching based on network status information of the involved SA networks. The prior art merely focuses on considering local (non-network) parameters, and while such a local approach may be sufficient for some switching decisions (at best), it does not allow a holistic view on network management, wherein a certain SA network may be preferred over another SA network in view of (non-local) network status. Thereby, in embodiments, the network status information consists only of quantities or parameters not related to network management as such. In other embodiments, the network status information comprises (or even, consists of) at least one quantity or parameter relating to network management. This may relate, e.g., to , from the point of view of the terminal, first, particularly congestion.

In embodiments, the network status information comprises at least one of network congestion information indicative of a congestion level of the respective SA networks, physical link conditions of the respective SA networks, and beam footprint of the respective SA networks. In some embodiments, the network status information thereby consists of only one of network congestion information indicative of a congestion level of the respective SA networks, physical link conditions of the respective SA networks, and beam footprint of the respective SA networks. In some embodiments, the network status information comprises at least two of network congestion information indicative of a congestion level of the respective SA networks, physical link conditions of the respective SA networks, and beam footprint of the respective SA networks. In some embodiments, the network status information comprises each of network congestion information indicative of a congestion level of the respective SA networks, physical link conditions of the respective SA networks, and beam footprint of the respective SA networks.

In embodiments, the network status information comprises network management information preferably configurable based on an instruction received from an operator via an API. In some embodiments, the network status information consists of only network management information. Embodiments wherein the network status information comprises network management information may relate, e.g., to embodiments with configurable domains, wherein the current SA network and the at least one candidate target SA network are configured to belong to one of a plurality of different domains, wherein, for the step of selecting the target SA network, a respective parameter comprised in the network status information of the respective candidate SA network is compared to a respective threshold, wherein an SA network belonging to the domain of the current SA network is selected when the respective parameter exceeds an intra-domain threshold, and wherein an SA network not belonging to the domain of the current SA network is selected when the respective parameter exceeds an inter-domain threshold different from said intra-domain threshold.

According to a second aspect, the invention provides a switching module for automatic selective switching of a terminal from a current SA network to a target SA network in a satellite communication system, the switching module comprising a communication module, a control module connected to said communication module, wherein the communication module is configured to receive, from a plurality of SA networks within the satellite communication system including each of the current SA network and each respective one of at least one candidate target SA network, measurement data indicative of the suitability of the candidate target SA network as the target SA network, wherein the control module is configured to identify a need for switching the terminal from the current SA network to another SA network based on predefined switching trigger conditions, identify at least one candidate target SA network from among the plurality of SA networks, retrieve, via the communication module, for the current SA network and for each respective one of the at least one candidate target SA networks, measurement data indicative of suitability of the candidate target SA network as target SA network, selecting, based on said measurement data, the target SA network from among the current SA network and the one or more candidate target SA networks, wherein the measurement data comprises network status information relating to the star network defined by said SA network. Thereby, in embodiments, the network status information comprises at least one of network congestion information indicative of a congestion level of the respective SA networks, physical link conditions of the respective SA networks, and beam footprint of the respective SA networks.

According to a further aspect, the invention provides a satellite network controller, said satellite network controller having access to the measurement data measured at the respective SA networks for automatic selective switching of a terminal from a current SA network to a target SA network in the satellite communication system to which the satellite network controller belongs, said satellite network controller comprising the switching module.

According to a further aspect, the invention offers a terminal, said terminal having access to the measurement data measured at the respective SA networks for automatic selective switching of said terminal from a current SA network to a target SA network in the satellite communication system to which the terminal belongs, said terminal comprising the switching module.

According to a further aspect, the invention provides a satellite communication system, comprising the switching module comprising a communication module and a control module, said switching module having access to the measurement data measured at the respective SA networks for automatic selective switching of a terminal from a current SA network to a target SA network in said satellite communication system, said switching module either belonging to the satellite network controller or to the terminal, a plurality of SA networks configured for automatic selective switching controlled by instructions received from the communication module and generated by the control module of said switching module. In embodiments, the switching module is thereby provided at least partly, preferably entirely, in the satellite network controller. In embodiments, the switching module is thereby provided at least partly in the terminal.

Preferred embodiments and their advantages are provided in the description and the dependent claims.

### Brief description of the drawings

The present invention will be discussed in more detail below, with reference to the attached drawings.
**Fig. 1** illustrates an example embodiment of an SA network according to the invention.
**Fig. 2** illustrates an example embodiment of a system according to the invention.
**Fig. 3** illustrates switching according to the invention.
**Fig. 4** illustrates switching with three domains according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "SA network" refers to a satellite access network. This may relate to a communications infrastructure that uses satellites to provide connectivity between end users and broader networks, for instance in areas where traditional terrestrial systems are limited or unavailable. In this setup, ground stations or user terminals may communicate with orbiting satellites, which may act as relay points to forward data to and from central networks or the internet. This arrangement is particularly valuable for delivering broadband, voice, and data services in remote or underserved regions, ensuring consistent communication coverage even in challenging or geographically isolated locations. In embodiments, the SA network may at least partially relate to 5G. In embodiments, the SA network does not relate in any way to 5G. In some embodiments, the terms "SA network" may relate to the SAN described in (Z. Xiao et al., LEO Satellite Access Network (LEO-SAN) Toward 6G: Challenges and Approaches, IEEE Wireless Comm. 31(2), 2024, doi:10.1109/MWC.011.2200310), with the difference that the SAN of the present invention may relate to LEO technology but is not limited thereto.

In this document, the term "star network" refers to the one-to-many relation that may be defined by an SA network, wherein a single gateway may be associated with a plurality of different terminals.

In this document, the term "gateway" and "hub" are interchangeable.

In this document, the term "switching" relates to changing, for at least one terminal, from one connection means to another connection means. The different connections means may relate, e.g., to different channels and/or different domains and/or different beams and/or different SA networks. In embodiments, the switching relates to switching, preferably automatic selective switching, of a terminal from one SA network to another SA network. In embodiments, the switching does not relate to a mode, or, equivalently, concerns only one "default" mode of switching. In other embodiments, the switching is done according to two or more modes. In embodiments, switching relates to (at least) three modes for switching a terminal between SA networks, wherein at least one, in some embodiments each mode, relates to automatic selective switching according to the invention. In such embodiments with three or more modes, a first, second and third mode may be identified. In such embodiments, a first mode may relate to 'regular' switching (no emergency identified) and may be referred to as ABS (Automatic Beam Switching). A second mode may relate to emergencies and may be referred to as ES (Emergency Switching). Both the first and the second mode may be "autonomous methods" that do not require external intervention, wherein the switching may relate to automatic selective switching according to the invention. A third mode may relate to externally triggered terminal switching, and may be referred to as ETS (Externally Triggered Switching), which, in embodiments, may be provided non-autonomously. For instance, the third mode may be provided exclusively based on configuration via an API, which may relate to e.g., external input of an operator.

In embodiments, the first threshold and the second threshold (e.g., an intra-domain threshold and an inter-domain threshold, or a pair of intra-domain thresholds, or a pair of inter-domain thresholds) relate to a mechanism wherein one threshold serves for nominal switching operation, and the other threshold relates to an overriding mechanism that takes over when nominal switching fails and/or when overriding is desired by an operator. In example embodiments, the overriding relates to switching from a nominal mode to an emergency switching mode. In example embodiments, the overriding relates to switching from a nominal mode or an emergency switching mode to an externally triggered switching mode based on configuration information received, e.g., via an API.

In embodiments with two or more modes of switching, SA networks may, in some embodiments, advantageously be classified into domains. Thereby, the switching mode may be associated with at least one of the domains or each of the domains, and/or the switching mode may be different depending on whether the current and target SA network belong to the same domain or to different domains. For instance, in embodiments with ABS mode and ES mode ETS mode, it may be configured that ABS and ES are used between SA networks in the same domain, and ETS is required (via API input) to switch terminals between SA networks in different domains. In some embodiments, ES may thereby also switch terminals across domains, and may be used, e.g., in addition to, and/or as a last resort in absence of, an external API command or in an emergency.

In embodiments, at least one of the modes is associated only with intra-domain switching and not with inter-domain switching; this may relate to any mode and may be equally relevant for, e.g., ABS or ES or ETS. In embodiments, at least one of the modes is associated only with inter-domain switching and not with intra-domain switching; this may relate to any mode and may be particularly relevant for, e.g., ES or ETS. In embodiments, at least one of the modes is associated with both intra-domain switching and inter-domain switching; this may relate to any mode and may be particularly relevant for, e.g., ES or ETS.

In embodiments with two or more domains and two or more modes of switching, the switching may be configured to be done within the domain and according to a first (lower) intra-domain threshold associated with switching according to a first mode (e.g., regular switching and/or ABS), and within the domain and according to a second (higher) intra-domain threshold associated with switching according to a second mode (e.g., emergency switching and/or ES, which may be relevant for instance as back-up to regular automatic selective switching (e.g., in case of error or unexpected behaviour)).

In embodiments with two or more domains and two or more modes of switching, the switching may be configured to be done within the domain and according to a (lower) intra-domain threshold associated with switching according to a first mode (e.g., regular switching and/or ABS and/or ETS), and outside the domain (i.e., to another domain) and according to a (higher) inter-domain threshold associated with switching according to a second mode (e.g., emergency switching and/or ES and/or ETS, which may be relevant for instance as back-up when the current domain does not meet minimal connectivity requirements).

In embodiments with three (or more than three) domains and three (or more than three) modes of switching, the switching may be configured to be done within the domain and according to a first (lower) intra-domain threshold associated with switching according to a first mode (e.g., regular switching and/or ABS), and within the domain and according to a second (higher) intra-domain threshold associated with switching according to a second mode (e.g., emergency switching and/or ES, which may be relevant for instance as back-up to regular automatic selective switching (e.g., in case of error or unexpected behaviour)) and outside the domain (i.e., to another domain) and according to a (higher) inter-domain threshold associated with switching according to a third mode (e.g., emergency switching and/or ES and/or ETS, which may be relevant for instance as back-up when the current domain does not meet minimal connectivity requirements).

In embodiments, at least said step of selecting the target SA network is carried out by a satellite network controller having access to the measurement data measured at the respective SA networks. This may advantageously allow to serve a plurality of terminals with the same physical equipment, which may contribute to network efficiency and/or energy efficiency and/or ease of operation and/or reduce power consumption at the level of the terminals.

In embodiments, at least said step of selecting the target SA network is carried out by the terminal having access to the measurement data measured at the respective SA networks. This may advantageously allow heterogeneity with respect to behavior of individual terminals and/or may have the advantage of reducing network overhead in cases where the terminal is carrying out measurement but is not currently being triggered to initiate or complete an actual switching operation.

In embodiments, the current SA network and the at least one candidate target SA network are configured to belong to one of a plurality of different domains, wherein, for the step of selecting the target SA network, a respective parameter comprised in the network status information of the respective candidate SA network is compared to a respective threshold, wherein an SA network belonging to the domain of the current SA network is selected when the respective parameter exceeds an intra-domain threshold, and wherein an SA network not belonging to the domain of the current SA network is selected when the respective parameter exceeds an inter-domain threshold different from said intra-domain threshold. This may advantageously contribute to configurability of the network, wherein a network may, e.g., be incrementally configured based on experience with network performance, and/or wherein traffic flows may be optimized with respect some administrative requirement (e.g., different service level agreements at the level of different domains). Configurability may thereby relate, e.g., to receiving an instruction from an operator specifying the domain(s) to which an SA network belongs. In embodiments, the domains are nonoverlapping (i.e., none of the SA networks belongs to more than one domain). In embodiments, the domains are at least partially overlapping (i.e., at least one of the SA networks belongs to more than one domain). In embodiments, the domains span the entire set of SA networks (i.e., all SA networks belong to at least one domain). In embodiments, the domains do not span the entire set of SA networks (i.e., at least one SA network does not belong to any specified domain, or, equivalently, belongs to a "default domain").

In embodiments, the different domains are configurable based on an instruction received from an operator via an API. This may advantageously allow to manage the network, whereby configuration may reflect, e.g., experience with actual (e.g., measured) network performance, and/or optimization of traffic flows with respect some administrative requirement (e.g., different service level agreements at the level of different domains).

In embodiments, the current SA network and target SA network are associated with different beams of the same satellite or with different beams of different satellites. This may, e.g., relate to any of: multiple SA networks in a beam illuminated by a satellite, multiple beams per satellite, and multiple satellites in a group of satellites.

In embodiments, the selective switching is carried out for a batch of at least two terminals at once. This may advantageously enable switching that is aware of network status while keeping switching overhead low by working with batches.

In embodiments, for the step of selecting the target SA network, the current SA network is excluded from the SA networks that can be selected. In related embodiments, the method thereby includes the step of receiving, from an operator, an instruction to exclude the current SA network from the SA networks that can be selected, preferably via an API. In some embodiments wherein the current SA network is excluded, the current SA network being excluded relates to emergency switching away from the current SA network.

In embodiments, the method comprises the step of receiving, from an operator, an instruction to configure, preferably via an API, any of the predefined switching trigger conditions and a criterion for said selection of the target SA network.

In embodiments, the predefined switching trigger conditions relate to a schedule of continuous automated switching.

US11917465B2 describes a handover method with steps S301-310 in its Fig. 7A. In its paragraph [0043], US11917465B2 discloses: "In the N cell handovers, the first network device only needs to obtain the user information once, to configure handover conditions for the N subsequent handovers in advance at a time, thereby simplifying a network signaling procedure and reducing network overheads." Hence, US11917465B2 is directed merely to preventing the repeated sending of user information, and not to controlling whether (or how or when) switching is to take place between a first network device and a next network device. Related, US11917465B2 does not concern the first and the second network devices to relate to SA networks. US11917465B2 merely discloses that the signal strength is measured by the terminal device, based on which the terminal device determines when a handover condition is met and sends a synchronization message. Furthermore, US11917465B2 does not describe that the first and second device network devices may be controlled by any satellite network controller or by an external API. Furthermore, US11917465B2 does not concern performing an emergency switch on a terminal device when it has or will lose coverage to the current cell. US11917465B2 merely concerns the terminal measuring the signal quality of a first cell and a second cell, and the terminal determining when a handover condition is met, based on the measured signal quality. Also, US11917465B2 does not describe switching a batch of terminals (plurality of terminals) at once.

JP7079360B1 describes a system including a multi-beam satellite communicating with a terminal and a base station. Different from the present invention, which may generically switch the terminal based on measurement data indicative of suitability of the candidate target SA network as target SA network, JP7079360B1 merely describes switching according to a limited specific "hierarchy" of switching conditions. As may be understood from par. [0029-0035] of JP7079360B1, congestion measured locally at the terminal is always considered first, (e.g., B4 congested), without any consideration of the status of the involved SA networks. As described in JP7079360B1, when the local congestion at the terminal is considered (and nothing else), then "the next beam after beam B4 [is selected]" (see par. [0032]). Particularly, different from the present invention, JP7079360B1 does not concern switching based on information related to the network status of the involved SA networks (e.g., signal strength, polarization capabilities, frequency bands, etc.), as the focus is merely on considering a local (non-network) parameter first, particularly congestion. Correspondingly, since the switching as disclosed in JP7079360B1 is based merely on checking local congestion first, it may or may not allow to detect local congestion, but cannot reveal status information of the SA network supporting the satellite communication. Furthermore, JP7079360B1 does not disclose a plurality of SA networks that may be controlled by an external API. Furthermore, JP7079360B1 does not disclose performing an emergency switch on a terminal device when it has or will lose coverage to a current SA network. Also, JP7079360B1 does not describe switching a batch of terminals (plurality of terminals) at once.

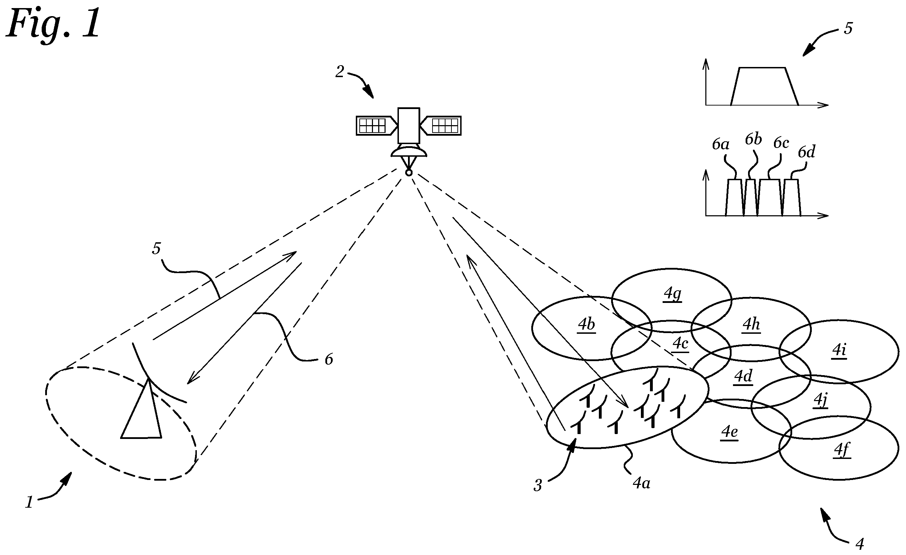

Example embodiments of the invention will be described with reference to Figs. 1-4 according to Examples 1-5. As the examples are related, reference numerals of one example may refer to elements of the other examples as well.

### Example 1: example of an SA network according to the invention

This example illustrates an example embodiment of an SA network according to the invention.

Figure 1 shows an example of this SA network. The SA network belongs to a satellite communication system providing a point to multipoint connection between a hub or gateway 1 and multiple remote terminals, or, equivalently, "terminals" 3, thereby relying on a satellite 2 enabling a set 4 of multiple beams.

The SA network realizes a bidirectional communication link through the satellite 2, thereby connecting the terminals 3 to the hub 1. There are multiple SA networks in the beam 4a illuminated by the satellite 2, multiple beams 4a-4j per satellite 2 and multiple satellites (only satellite 2 shown) in a group of satellites providing connectivity. The hub 1 is transmitting the forward carrier 5 of the SA network through the satellite 2 to the group of terminals 3 in the beam 4a. The terminals in the SA network use return carriers 6, 6a-6d to transmit information to the hub 1 through the satellite 2.

Through switching according to the invention, the terminals 3 are switched over, in batch, from the SA network, being the current SA network, to another SA network (not shown). The switching module (not shown) thereby advantageously bases its decision on the network status information of both the current SA network and the target SA network, deciding, based on the comparison of the respective network status information, that switching is desirable. Subsequently, the batch of terminals is switched to the target SA network.

### Example 2: example two-hub system illustrating the invention

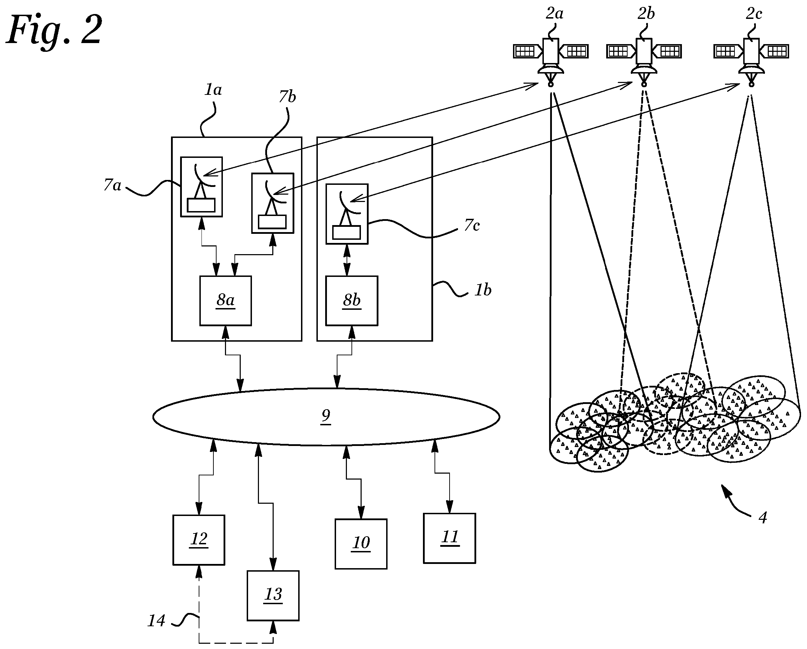

This example illustrates a system according to the invention. Figure 2 shows a diagram illustrating an example embodiment of a system according to the invention. The system involves two hubs 1a and 1b.

The diagram illustrates a network architecture involving satellites 2a-2c, data centers, and connectivity infrastructure. At the top of the diagram, multiple satellites 2a-2c are shown. Satellite 2a is connected to hub 1a and to various terminals (solid line connector), and may be considered in correspondence with hub 1, satellite 2 and terminals 3 of Example 1. Likewise, the other satellites are also connected to hubs and terminals (dashed line connectors). As ground infrastructure, two hubs 1a, 1b are considered. Each hub contains two main components: one or more "RFS + Modems modules" 7a-7c, and a "data processing and management data center module" 8a, 8b. Thereby, hub 1a comprises two similar modules 7a, 7b and hub 1b comprises a single module 7c. The respective hubs 1a, 1b connect, via respective modules 8a, 8b, to a "WAN" (Wide Area Network) 9, which is connected the "Internet" 10, "Private Networks" 11, a "NOC / NMS (Network Operations Center / Network Management System) module" 12, and an "Operator external command and configuration system module" 13. Thereby, the "NOC / NMS (Network Operations Center / Network Management System) module" 12 is responsible for central data processing and management for the system. A dotted line between module 12 and module 13 represents a data exchange link 14 relating to an API for system configuration and external commanding to switch terminals.

In this example, through switching according to the invention, terminals are switched over, in batch, from their current SA network to the target SA network. The switching module, which may reside, e.g., within the "NOC / NMS (Network Operations Center / Network Management System) module" 12, thereby advantageously bases its decision on the network status information of both the current SA network and a plurality of candidate SA network, to select, based on the comparison of the respective network status information, which candidate SA network becomes the target SA network. Subsequently, the batch of terminals is switched to the target SA network. In this example, the network status information comprises each of network congestion information indicative of a congestion level of the respective SA networks, physical link conditions of the respective SA networks, and beam footprint of the respective SA networks. Furthermore, the network status information comprises network management information relating to several domains. For the step of selecting the target SA network, a respective parameter comprised in the network status information of the respective candidate SA network is compared to a respective threshold. In this example, an SA network belonging to the domain of the current SA network is selected in view of the parameter exceeding an intra-domain threshold. Another SA network not belonging to the domain of the current SA network is not selected, because the parameter for that SA network did not exceed the inter-domain threshold. Both the intra-domain threshold and the inter-domain threshold were thereby set by an operator. Particularly, for all SA networks and all domains, these thresholds were configured based on an instruction received from the operator via an API. In this way, the switching is done in line with the requirements and an underlying policy set by the operator and expressed, in this example, through the values of the respective thresholds.

### Example 3: example of switching according to the invention

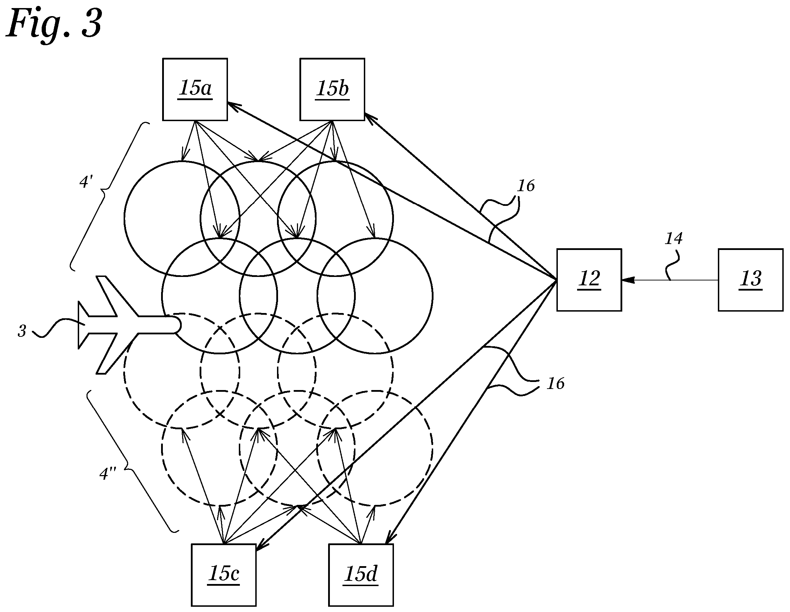

This example illustrates switching according to the invention. Figure 3 illustrates a moving terminal 3 traveling in a plane and passing through a zone with a first set 4' of beams belonging to a first domain of two SA networks associated with respective SA network controllers 15a and 15b and a second set 4" of beams belonging to a second domain of two SA networks associated with respective SA network controllers 15c and 15d. The SA network controllers may also be referred to as ABS controllers, wherein ABS is short for "automatic beam switch".

Like in Example 2, a "NOC / NMS (Network Operations Center / Network Management System) module" 12 is provided, as well as an "Operator external command and configuration system module" 13. Also here, the "NOC / NMS (Network Operations Center / Network Management System) module" 12 is responsible for central data processing and management for the system. Also here, a data exchange link is present between module 12 and 13 relating to an API for system configuration and external commanding to switch terminals. In this example, the system configuration relates to defining the first domain and the second domain, and the management relates to sending, by module 12, external SA network switch commands 16 to the respective SA network controllers 15a-15d. When comparing with Example 2, each of the SA network controllers 15a-15d may correspond to one of the two modules 8a, 8b of Example 2.

When terminal 3 moves from left to right on Fig. 3 it flies over a region that is in the overlap between the first domain (beam set 4') and the second domain (beam set 4"). When this is detected, switching is performed based on intra-domain thresholds and inter-domain thresholds configured via the API with module 13. When approaching the first and second domain, the switching may thereby be determined based on comparison between each of the current SA network (not shown), a candidate SA network belonging to the first domain and a candidate SA network belonging to the second domain. This may be done based on each of network congestion information indicative of a congestion level of the respective SA networks, physical link conditions of the respective SA networks, beam footprint of the respective SA networks. The switching is then performed to a selected SA network belonging either to the first domain or the second domain. When travelling further, next switching operations may be carried out, wherein the switching may be mainly (but not exclusively) governed by the intra-domain thresholds and inter-domain thresholds configured via the API, and additionally based on each of network congestion information indicative of a congestion level of the respective SA networks, physical link conditions of the respective SA networks, beam footprint of the respective SA networks. This may, e.g., allow to largely let a terminal travel within the same domain, if possible (e.g., proper connectivity and/or no congestion within next SA network in the domain), and switch to the other domain only if-need-be (e.g., better connectivity in the other domain and/or congestion within the next SA network in the domain). The switching is orchestrated by module 12 and the SA network controllers through sending, by module 12, external SA network switch commands 16 to the respective SA network controllers 15a-15d.

### Example 4: further example illustrating switching according to the invention

This example may be mostly like Example 3 yet differs therefrom as this example considers variants, some of which not described in Example 3. In this regard, Example 4 may also be considered independent of Example 3.

This example relates to a satellite "platform" to manage and control the entirety of the SA networks, satellite beams, satellites, and terminals. One of the control aspects in the system may thereby be referred to as Automatic Beam Switching (ABS). A ground segment based distributed controller thereby performs ABS for mobility and load balancing. ABS is integrated in the overall system and is automatically turned on for switching terminals between SA networks triggered by certain conditions or groups of conditions. The source and destination SA networks can be in the same satellite beam or across satellite beams in the same satellite or across satellites. This ABS feature is always on for all terminals in the system. The ABS control considers the following factors (among others) when deciding to switch a terminal: visibility and signal strength of different SA networks at the terminal's location, transmit and receive polarization capabilities of the terminal, transmit and receive frequency bands in the terminal, congestion in the SA networks.

In a "basic variant" of this example, the ABS's and/or switching modules are basic. The trigger for a switch is based on the comparison of conditions in the current SA network and candidate SA networks. However, it is fully automated and runs continuously and does not require external intervention or control. The hub may decide to order an Automatic Beam Switch (ABS) for reasons which include: load balancing in one SA network vs another; comparison of physical link conditions and beam footprint of one beam vs another. The external API enables an operator to: configure the system for ABS operations (e.g., maps and rules for terminal switching); trigger switching of a single terminal between two SA networks. Emergency beam switching may thereby be provided, with configuration and triggering as follows: even when switching is controlled by external API, the hub will override the API when a terminal is about to lose contact with the network; triggering may be due to approaching a beam edge; triggering may be done when an SA network will go down for maintenance purposes and batch switching is commanded by the ground segment.

In a "more refined variant" of this example, the ABS's and/or switching modules are more refined. In such a variant, a ground system provides internally-driven beam switch decisions, based on maps and rules configured by the operator. The operator is provided with a way to configure the network so its internal logic could switch remote terminals between some SA networks, while it is blocked from switching to some other SA networks. An API is provided to command to switch remote terminals across the boundaries of "blocked" SA networks, at the operator's discretion. For some use cases, such as beams which sweep across the ground due to non-Geostationary satellites, large numbers of terminals are switched in a short time according to a batch configuration configured with the API.

For each of these variants, the system is configured for switching a large batch of terminals in a short time. Through an efficient and flexible API, a batch of terminals (ranging from a single terminal to all the terminals in the SA network) is switched at once from one SA network to another. The new SA network may be on the same or on a new satellite. The system executes the switch in an orderly fashion, to minimize disruption to service in the source and target SA networks. The enhanced system also allows the operator to configure SA networks into domains. ABS is enabled for terminals within a domain, but is disabled for switching terminals across domains. The operator's external controller may command the system to switch a remote or a batch of remotes to an SA network across the domain boundary. The operator may choose to configure any number of domains; these domains could be based on, for example, SA networks served by different satellites, satellites in different orbits or orbit types, different classes of service, or any operator policy which meets their business or operational needs. This may be appreciated considering Example 3 and its corresponding Figure 3, where two domains are configured. Different from Example 3, in this example, six SA networks (represented by the circles belonging to set 4') are in the first domain; another six SA networks (represented by the circles belonging to set 4") are in the second domain. The terminal passing through this region (an aircraft, in this example) is using an SA network in the first domain; it will stay in that domain unless externally commanded to switch to an SA network in the second domain. The only exception is the case where the terminal will lose coverage completely unless it crosses the domain boundary; in that case the system's internal logic will perform an Emergency Switch (ES) to an SA network of the second domain.

### Example 5: example with switching over three domains according to the invention

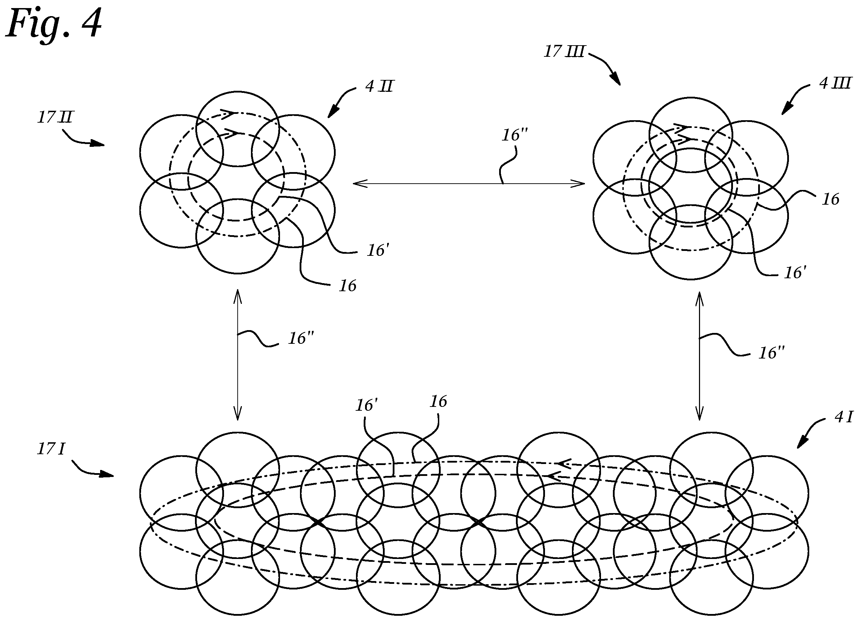

The present example relates to three domains 171, 1711 and 17III and is illustrated by Fig. 4. Thereby, in this example, domain 171 contains a group of geo satellites which provide reliable coverage via several SA networks at any latitude lower than an edge latitude, but not at the north pole or south pole. The edge latitude may be, e.g., between 60 and 81; it may for instance be 65 or 70 or 75. Coverage at the north pole is provided by domain 1711 and 17III, which each relate to highly elliptical orbits and associated SA networks. Thereby, domains 1711 and 17III provide alternating coverage by hover the north pole, wherein some overlap is provided between rise and set. The overlap may be such that one of the domains 1711 and 17III nominally provide coverage for several hours but actually one or two hours more (e.g., 8 hours nominally but actually 10 hours), which may ensure reliable connectivity. The switching within and between these domains is realized at least in part by the automatic selective switching of the invention, possibly aided with manual interventions via an API.

The switching relates to three modes for switching a terminal between SA networks of the respective three domains 41, 411 and 4111 with respective three groups of beams 171, 1711 and 17III, referred to as nominal intra-domain switching 16, emergency intra-domain switching 16', and inter-domain switching 16".

Through these modes, better control is offered over the usage of each of the domains, which is highly desirable, since domain 171 is realized with a first technology which may have higher (abundant) capacity, as opposed to domains 1711 and 17III, with less abundant (scarcer) capacity.

In this example, the first mode 16 is also referred to as ABS (Automatic Beam Switching), which is the nominal mode of switching and is done via automatic selective switching 16 within the domain. The second mode is also referred to as intra-domain ES (Emergency Switching), and serves as fallback for switching within the same domain. The third mode 16" constitutes inter-domain switching and is done either according to ETS (Externally Triggered Switching) via an API, as nominal way of switching, or according to inter-domain ES, as fallback mechanism.

Both the first and the second mode are considered "autonomous methods" that do not require external intervention, wherein the switching may relate to automatic selective switching according to the invention. Also, the inter-domain ES may be considered autonomous. The inter-domain ETS may be considered as externally controlled. In the current example, ETS may be done according to predefined switching trigger conditions. This may relate to a schedule of continuous automated switching considering the elliptic orbits and rise and set of each of the domains 1711 and 17111, ensuring optimal switchover between these two domains.

(End of Example 5)

## Claims

1. A method for automatic selective switching of a terminal from a current SA network to a target SA network in a satellite communication system, the method comprising:
identifying a need for switching the terminal from the current SA network to another SA network based on predefined switching trigger conditions;
identifying at least one candidate target SA network from among a plurality of SA networks comprised in the satellite communication system;
determining, for the current SA network and for each respective one of the at least one candidate target SA networks, measurement data indicative of suitability of the candidate target SA network as target SA network;
selecting, based on said measurement data, the target SA network from among the current SA network and the one or more candidate target SA networks;
wherein the measurement data comprises network status information relating to the star network defined by said SA network; and
wherein the network status information comprises at least one of: network congestion information indicative of a congestion level of the respective SA networks, physical link conditions of the respective SA networks, beam footprint of the respective SA networks.

2. The method of claim 1, wherein at least said step of selecting the target SA network is carried out by a satellite network controller having access to the measurement data measured at the respective SA networks.

3. The method of claim 1, wherein at least said step of selecting the target SA network is carried out by the terminal having access to the measurement data measured at the respective SA networks.

4. The method of any of the previous claims, wherein the current SA network and the at least one candidate target SA network are configured to belong to one of a plurality of different domains;
wherein, for the step of selecting the target SA network, a respective parameter comprised in the network status information of the respective candidate SA network is compared to a respective threshold; wherein an SA network belonging to the domain of the current SA network is selected when the respective parameter exceeds an intra-domain threshold, and wherein an SA network not belonging to the domain of the current SA network is selected when the respective parameter exceeds an inter-domain threshold different from said intra-domain threshold.

5. The method of claim 4, wherein the different domains are configurable based on an instruction received from an operator via an API.

6. The method of any of the previous claims, wherein the current SA network and target SA network are associated with different beams of the same satellite or with different beams of different satellites.

7. The method of any of the previous claims, wherein the selective switching is carried out for a batch of at least two terminals at once.

8. The method of any of the previous claims, wherein, for the step of selecting the target SA network, the curent SA network is excluded from the SA networks that can be selected, **preferably** wherein the method includes the step of receiving, from an operator, an instruction to exclude the current SA network from the SA networks that can be selected, **preferably** via an API.

9. The method of claim 8, wherein the current SA network being excluded relates to emergency switching away from the current SA network.

10. The method of any of the previous claims, comprising the step of receiving, from an operator, an instruction to configure, preferably via an API, any of the predefined switching trigger conditions and a criterion for said selection of the target SA network.

11. The method of any of the previous claims, wherein the predefined switching trigger conditions relate to a schedule of continuous automated switching.

12. A switching module for automatic selective switching of a terminal from a current SA network to a target SA network in a satellite communication system, the switching module comprising:
a communication module;
a control module connected to said communication module;
wherein the communication module is configured to receive, from a plurality of SA networks within the satellite communication system including each of the current SA network and each respective one of at least one candidate target SA network, measurement data indicative of the suitability of the candidate target SA network as the target SA network;
wherein the control module is configured to:
identify a need for switching the terminal from the current SA network to another SA network based on predefined switching trigger conditions;
identify at least one candidate target SA network from among the plurality of SA networks;
retrieve, via the communication module, for the current SA network and for each respective one of the at least one candidate target SA networks, measurement data indicative of suitability of the candidate target SA network as target SA network;
selecting, based on said measurement data, the target SA network from among the current SA network and the one or more candidate target SA networks;
wherein the measurement data comprises network status information relating to the star network defined by said SA network; and
wherein the network status information comprises at least one of: network congestion information indicative of a congestion level of the respective SA networks, physical link conditions of the respective SA networks, beam footprint of the respective SA networks.

13. A satellite network controller, said satellite network controller having access to the measurement data measured at the respective SA networks for automatic selective switching of a terminal from a current SA network to a target SA network in the satellite communication system to which the satellite network controller belongs, said satellite network controller comprising the switching module of claim 12.

14. A terminal, said terminal having access to the measurement data measured at the respective SA networks for automatic selective switching of said terminal from a current SA network to a target SA network in the satellite communication system to which the terminal belongs, said terminal comprising the switching module of claim 12.

15. A satellite communication system, comprising:
the switching module of claim 12 comprising a communication module and a control module, said switching module having access to the measurement data measured at the respective SA networks for automatic selective switching of a terminal from a current SA network to a target SA network in said satellite communication system, said switching module **either** belonging to the satellite network controller of claim 13 or to the terminal of claim 14;
a plurality of SA networks configured for automatic selective switching controlled by instructions received from the communication module and generated by the control module of said switching module.
